# EUROPÄISCHE PATENTSCHRIFT

(11) **EP 1 897 292 B1**
(45) Veröffentlichungstag und Bekanntmachung des Hinweises auf die Patenterteilung: **12.11.2008**
(21) Anmeldenummer: 06763435.2
(22) Anmeldetag: 01.06.2006
(51) Int. Cl.: H04L 12/56

(54) **VERFAHREN ZUR BEREITSTELLUNG VON ERSATZWEGEN ALS SCHNELLE REAKTION AUF DEN AUSFALL EINES LINKS ZWISCHEN ZWEI ROUTING-DOMÄNEN**
METHOD FOR PROVIDING SUBSTITUTE ROUTES IN RAPID RESPONSE TO THE FAILURE OF A LINK BETWEEN TWO ROUTING DOMAINS
PROCEDE DE MISE A DISPOSITION DE CHEMINS DE REMPLACEMENT EN TANT QUE REACTION RAPIDE A LA DEFAILLANCE D'UNE LIAISON ENTRE DEUX DOMAINES D'ACHEMINEMENT

(30) Priorität: 02.06.2005 DE 102005025420
(43) Veröffentlichungstag der Anmeldung: 12.03.2008
(73) Patentinhaber: Nokia Siemens Networks GmbH & Co. KG, 81541 München (DE)
(72) Erfinder: LICHTWALD, Götz, 75045 Walzbachtal-Wössingen (DE)
(86) Internationale Anmeldenummer: PCT/EP2006/062807
(87) Internationale Veröffentlichungsnummer: WO 2006/128893

(56) Entgegenhaltungen:
- EP-A- 1 453 250
- US-A1- 2002 131 362
- REKHTER Y ET AL: "A Border Gateway Protocol 4 (BGP-4)" INTERNET, RFC STANDARDS, März 1995 (1995-03), XP002226832 in der Anmeldung erwähnt

## Beschreibung

Die Erfindung betrifft ein Verfahren zur Bereitstellung von Ersatzwegen als schnelle Reaktion auf den Ausfall eines Links zwischen zwei Routing-Domänen in einem paketorientierten Netz.

Die Erfindung liegt auf dem Gebiet der Internet-Technologien bzw. spezifischer auf dem Gebiet der Routing-Verfahren in paketorientierten Netzen und zielt auf die Übertragung von Daten unter Echtzeitbedingungen.

Die derzeit wohl wichtigste Entwicklung auf dem Gebiet der Netze ist die Konvergenz von Sprach- und Datennetzen. Ein wichtiges Zukunftsszenario ist, dass Daten, Sprache und Videoinformationen über ein paketorientiertes Netz übertragen werden, wobei neu entwickelte Netztechnologien die Einhaltung von Anforderungsmerkmalen für verschiedene Verkehrsklassen gewährleisten. Die zukünftigen Netze für verschiedene Arten von Verkehr werden paketorientiert arbeiten. Aktuelle Entwicklungstätigkeiten betreffen die Übertragung von Sprachinformationen über herkömmlich für Datenverkehr verwendete Netze, vor allem IP (Internet Protokoll) basierte Netze.

Um Sprachkommunikation über Paketnetze und insbesondere IPbasierte Netze in einer Qualität zu ermöglichen, die der Sprachübertragung über leitungsvermittelte Netze entspricht, müssen Qualitätsparameter wie z.B. die Verzögerung von Datenpaketen oder der Jitter in engen Grenzen gehalten werden. Bei Sprachübertragung ist von großer Bedeutung für die Qualität des angebotenen Dienstes, dass die Verzögerungszeiten Werte von 150 Millisekunden nicht wesentlich übersteigen. Um eine entsprechend geringe Verzögerung zu erreichen, wird an verbesserten Routern und Routing-Algorithmen gearbeitet, die eine schnellere Bearbeitung der Datenpakete ermöglichen sollen. Beim Routing über IP-Netze wird üblicherweise zwischen Intradomain- und Interdomain-Routing unterschieden. Bei einer Datenübertragung über das Internet sind üblicherweise Netze - man spricht hier auch von Teilnetzen, von Domänen oder so genannten Autonomen Systemen (vom Englischen Autonomous System) - verschiedener Netzbetreiber involviert. Die Netzbetreiber sind zuständig für das Routing innerhalb der Domänen, die in ihren Zuständigkeitsbereich fallen. Innerhalb dieser Domänen haben sie die Freiheit, die Vorgehensweise beim Routing nach eigenen Wünschen beliebig anzupassen, solange nur Dienstgütemerkmale eingehalten werden können. Anders stellt sich die Situation beim Routing zwischen verschiedenen Domänen dar, bei dem unterschiedliche Domänenbetreiber miteinander in Verbindung treten. Interdomain-Routing wird dadurch verkompliziert, dass einerseits möglichst optimale Pfade über verschiedene Domänen zu dem Ziel bestimmt werden sollen, andererseits aber Domänenbetreiber lokal Strategien anwenden können, die eine globale Berechnung von optimalen Pfaden nach objektiven Kriterien beeinflussen. Beispielsweise besteht eine Strategie darin, für Verkehr einer bestimmten Herkunft Domänen von Netzbetreibern eines bestimmten Landes zu vermeiden. Diese Strategie ist nun aber in der Regel nicht allen Netzbetreibern mit Domänen, über die der Verkehr geroutet wird, bekannt, d.h. ein Netzbetreiber muss lokal eine Entscheidung bezüglich der Domäne treffen, zu der er Verkehr weiterleitet, ohne über vollständige Informationen über den optimalen Weg im Sinne einer Metrik zu verfügen. Die Strategien werden häufig auch mit dem englischen Ausdruck "Policies" bezeichnet.

Für das Routing zwischen verschiedenen Domänen werden sogenannten Exterior-Gateway-Protokolls EGP verwendet. Im Internet wird derzeit meist das in dem RFC (Request for Comments) 1771 genauer beschriebene Border-Gateway-Protokoll Version 4 (Border-Gateway-Protokoll wird häufig mit BGP abgekürzt) verwendet. Das Border-Gateway-Protokoll ist ein sogenanntes Path-Vector-Protokoll. Eine BGP-Instanz (der Ausdruck "BGP-Speaker" findet sich häufig in englischsprachiger Literatur) wird von seinen BGP-Nachbarn über mögliche Wege zu über den jeweiligen BGP-Nachbar zu erreichenden Zielen informiert. Anhand von ebenfalls mitgeteilten Eigenschaften der Wege (im Englischen path attributes) enthält die BGP-Instanz zu den erreichbaren Zielen den aus ihrer lokalen Sicht jeweils optimalen Weg. Im Rahmen des BGP-Protokolls werden zwischen BGP-Instanzen vier Typen von Nachrichten ausgetauscht, darunter eine sogenannte Update- oder Änderungsnachricht, mit der Weginformationen durch das ganze Netz propagiert werden und die erlaubt, das Netz entsprechend Topologie-Änderungen zu optimieren. Die Aussendung von Aktualisierungsnachrichten führt üblicherweise zu einer Anpassung der Pfadinformationen bei allen BGP-Instanzen des Netzes im Sinne eines entsprechend der lokal vorliegenden Informationen optimierten Routings. Daneben spielen so genannte Keepalive- oder Zustandsbestätigungsnachrichten eine Rolle, mit denen eine BGP-Instanz seinen BGP-Nachbarn über seine Funktionsfähigkeit aufklärt. Bei Ausbleiben dieser Nachrichten gehen die BGP-Nachbarn davon aus, dass der Link zu der BGP-Instanz gestört ist.

Die Propagation von Topologie-Informationen mit Hilfe des BGP-Protokolls hat den Nachteil, dass bei häufigen Änderungsanzeigen eine beträchtliche Last der durch das Netz propagierten Nachrichten zur Anzeige der Änderung auftreten, und dass das Netz nicht auskonvergiert, wenn Änderungsnachrichten zu schnell aufeinander folgen. Dieses Problem, dass das Netz nicht auskonvergiert bzw. dass das Interdomain-Routing nicht stabil wird, wurde durch den so genannten Route-flap-damping-Ansatz angegangen. Die Idee hinsichtlich dieses Konzepts ist, die Anzeige einer Änderung durch einen BGP-Nachbarn mit einer Sanktion zu belegen. Bei Empfang einer Änderungsnachricht wird der Dämpfungsparameter erhöht und bei Überschreiten einer Schwelle durch den Dämpfungsparameter werden Änderungsmeldungen ignoriert. Der Dämpfungsparameter fällt exponentiell mit der Zeit ab. Als Folge davon werden Änderungsmeldungen von BGP-Instanzen ignoriert, solange der Dämpfungswert nicht die untere Schwelle (Wiederbenutzungsschwelle) unterschritten hat. Das Verfahren hat jedoch den Nachteil, dass es die Gefahr eines potentiellen Verbindungsverlustes mit sich bringt, was für Echtzeitverkehr nicht tolerierbar ist.

In der EP 1453250 ist ein Ansatz beschrieben, das BGP Protokoll durch ein Verfahren für eine schnelle Reaktion auf Linkausfälle beim Interdomain-Routing zu ergänzen. Dieser Ansatz sieht eine Bereitstellung von Ersatzpfaden vor, wobei keine vorausgehende Propagation von Änderungsnachrichten durch das ganze Netz erforderlich ist. Eine Änderung des Routings wird lediglich entlang von Ersatzpfaden vorgenommen. Diese beschränkte Umstellung des Routings erlaubt eine schnelle Reaktion auf Störungen. Bei andauernden Störungen (persistent error) kann zusätzlich eine Topologieanpassung im Netz mittels des BGP-Protokolls durchgeführt werden.

Weitere Ansätze sind in der US 2002/131362 beschrieben.

Die Erfindung hat zur Aufgabe, die Bereitstellung von Ersatzwegen als Reaktion auf Linkausfälle beim Interdomain-Routing zu verbessern.

Die Aufgabe wird durch ein Verfahren nach Anspruch 1 gelöst.

Die Erfindung zielt auf die Verfügbarkeit von Ersatzwegen bei Störung des Interdomain-Routings durch einen Linkausfall. Derartige Ersatzwege können beispielsweise mittels eines EGP (exterior gateway protocol) Protokolls berechnet und bei Interdomain-Routern vorgehalten werden. Erfindungsgemäß wird vorgesehen, dass ein Interdomain-Router nach Feststellen des Ausfalls eines Links bei fehlendem Vorliegen eines Ersatzweges eine Anfrage an einen benachbarten Interdomain-Router richtet.

Falls von dem benachbarten Interdomain-Router ein Ersatzweg mitgeteilt wird, kann dieser für ein Interdomain-Routing im Sinne einer Umgehung des ausgefallenen Links verwendet werden. Dabei wird das Interdomänen-Routing entlang dieses Ersatzweges so eingestellt, dass Datenpakete, die normalerweise über den gestörten Link geroutet würden, entlang des Ersatzweges zu ihrem Ziel (z.B. gegeben durch ein oder mehrere Zielnetzwerkpräfixe) geleitet werden.

Unter Linkausfall wird dabei jede Störung verstanden, die die Verbindung bzw. die Connectivity zwischen zwei Routing-Domänen unterbricht. Eine Routing-Domäne (die Ausdrücke "Autonomes System" oder "Teil-" bzw. "Subnetz" finden sich auch in der Literatur) ist durch einheitliches Routing innerhalb der Domäne gekennzeichnet. Beispielsweise werden innerhalb einer Domäne Pakete mittels des OSPF (Open shortest path first) Protokolls geroutet. Die Erfindung betrifft dagegen das Routing zwischen Domänen (Interdomänen-Routing), wobei von einem Verfahren zur Bereitstellung von Ersatzwegen ausgegangen wird, um auf Linkausfälle zwischen Domänen schnell und stabiler (im Vergleich zu BGP Topologieänderungen) reagieren zu können. Dabei wird der Linkausfall von einer Routing-Domäne festgestellt. Dies erfolgt durch einen Router der Routing-Domäne, der mit Protokollsoftware für Interdomain-Routing ausgestattet ist. Derartige Router werden im Folgenden als Interdomain-Router, EGP-Router (EGP: exterior gateway protocol) oder EGP-Instanzen bezeichnet. Bei dem BGP-Protokoll (BGP: border gateway protocol) spricht man auch von einem BGP-Speaker oder einer BGP-Instanz. Nach Bereitstellung eines Ersatzweges wird eine Nachricht über den Linkausfall propagiert, jedoch nicht durch das ganze Netz (wie bei BGP), sondern nur entlang des Ersatzweges. Router, die die Nachricht erhalten, stellen ihr Inter-Domänen-Routing für ein Routing entlang des Ersatzweges ein. Dies geschieht beispielsweise durch Änderung von Routing-Tabellen von den auf dem Ersatzweg liegenden Domänen zugehörigen Inter-Domänen-Routern.

Erfindungsgemäß wird durch Inter-Domänen-Routern nach Feststellen des Linkausfalls überprüft, ob dem Router ein Ersatzweg vorliegt. Falls dies nicht der Fall ist, wird eine Anforderungsnachricht an einen benachbarten Inter-Domänen-Router gesendet, womit das Übermitteln wenigstens eines Ersatzweges angefordert wird. Diese Anforderungsnachricht enthält beispielsweise eine Information über den ausgefallenen Link und das zu erreichende Ziel, so dass der die Nachricht empfangende Inter-Domänen-Router nach Wegen zu dem Ziel suchen kann, welche den Link vermeiden. Bei Vorliegen eines Ersatzwegs im benachbarten Inter-Domänen-Router wird dieser im Rahmen einer Antwortnachricht übermittelt. Bei Vorliegen mehrerer Ersatzwege können alle oder der gemäß geeigneten Kriterien (Metrik, Bandbreite, Verfügbarkeit) günstigste mitgeteilt werden. Dieses Konzept kann dahingehend erweitert werden, dass auch eine Antwortnachricht gesendet wird, wenn kein Ersatzweg vorliegt, um den anfragenden Inter-Domänen-Router dieses Ergebnis seiner Anfrage mitzuteilen.

Benachbarte Inter-Domänen-Router sind dabei Inter-Domänen-Router, die miteinander ohne Vermittlung eines weiteren Inter-Domänen-Routers kommunizieren können. Prinzipiell können benachbarte Inter-Domänen-Router sich in demselben Autonomen System oder in unterschiedlichen Autonomen Systemen befinden. Sie können direkt durch einen Link oder über weitere, nicht Inter-Domänen-Routing unterstützende Router verbunden sein.

Die Erfindung erweitert das aus der EP 1453250 bekannte Konzept. Ersatzwege für ein einen Linkausfall vermeidendes Inter-Domänen-Routing können erfindungsgemäß auch erhalten und verwendet werden, wenn sie zum Zeitpunkt des Erkennens der Störung nur im benachbarten Inter-Domänen-Router vorliegen.

Bei Nichtvorliegen eines Ersatzweges ist es sinnvoll, Anforderungsnachrichten an alle erreichbaren benachbarten internen BGP-Router zu senden (der Linksausfall kann zu einer Nichterreichbarkeit eines benachbarten EGP-Routers führen).

Da der Zeitfaktor bei einer Reaktion auf eine Störung eine wichtige Rolle spielt, sollte diese durch das Warten auf die Mitteilung eines Ersatzweges nicht zu sehr hinausgezögert werden. Daher wird gemäß einer Weiterbildung vorgeschlagen, einen Zeitgeber bzw. Timer einzuführen und bei Ablauf des Timers nur bis dahin eingegangene Ersatzwege zu berücksichtigen. Beispielsweise kann nach Ablauf des Timers aus den mitgeteilten Ersatzwegen nach Kriterien wie z.B. Metrik und Verfügbarkeit der günstigste ausgewählt werden. Eine andere Vorgehensweise ist, den ersten innerhalb der Timerlaufzeit mitgeteilten Ersatzweg zu verwenden, um die durch den Linkausfall verursachte Verzögerung zu minimieren. Falls innerhalb der Timerlaufzeit kein Ersatzweg durch benachbarte EGP-Router bekannt gemacht wird, kann eine Störungsreaktion gemäß dem verwendeten EGP-Protokoll durchgeführt werden, z.B. eine Topologieanpassung mittels des BGP-Protokolls.

Die Erfindung umfasst auch einen Router, der für eine Kommunikation mit anderen Routern mittels eines EGP-Protokolls ausgestaltet ist (EGP-Router) und zusätzlich Mittel für die Durchführung des erfindungsgemäßen Verfahrens (insbesondere für das Senden/Empfangen/Auswerten von Anforderungs- und Antwortnachrichten) aufweist. Diese Mittel können sowohl Hardwaremittel (CPU, ASIC) als auch Softwaremittel (Computerroutinen, Kommunikationsprotokolle) umfassen.

Im Folgenden wird der Erfindungsgegenstand im Rahmen eines Ausführungsbeispieles anhand von Figuren näher erläutert. Es zeigen:
- Fig. 1: Reaktion gemäß dem BGP-Protokoll beim Linkausfall mit BGP-Interdomain-Routing,
- Fig. 2: Reaktion auf einen Linkausfall durch Bereitstellung eines Ersatzweges,
- Fig. 3: Netzkonfiguration mit benachbarten BGP-Interdomain-Routern,
- Fig. 4: Nachrichtenaustausch zur Mitteilung von Ersatzwegen.

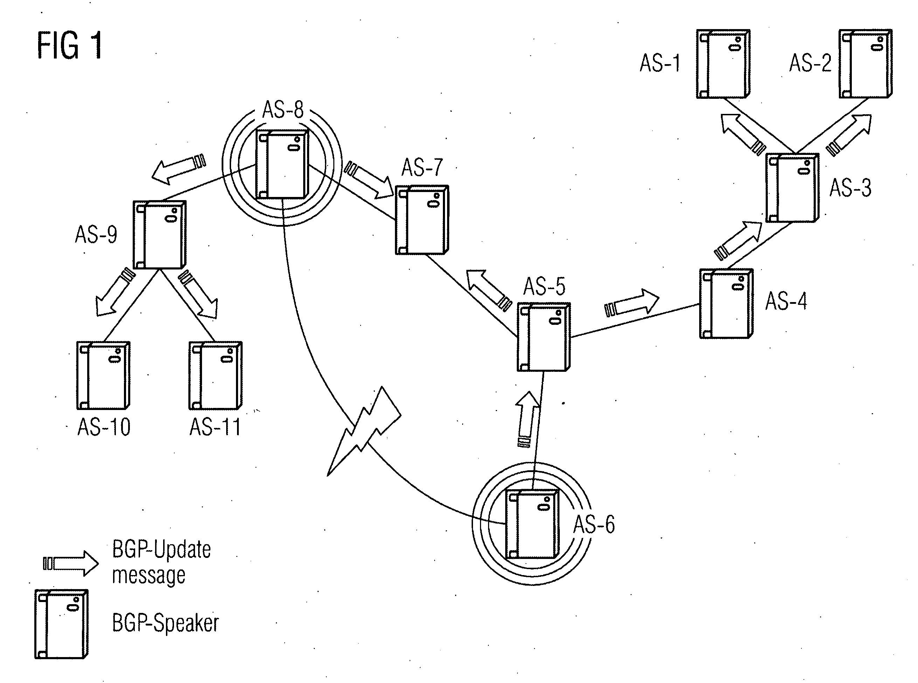

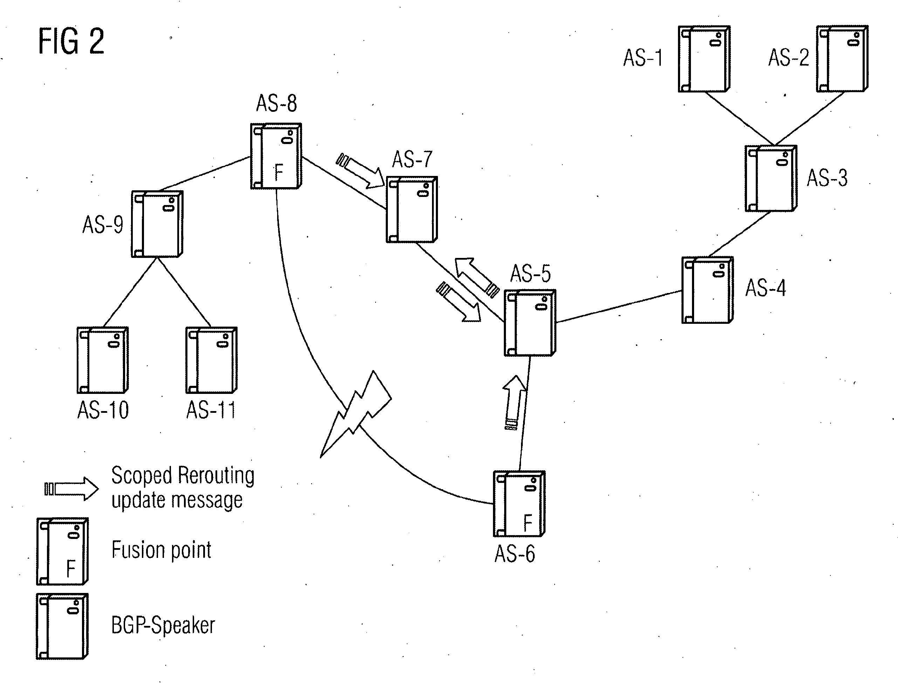

Mittels Fig. 1 und Fig. 2 wird das Konzept der Verwendung von Ersatzwegen beim Interdomain-Routing erläutert, wie es auch in der EP 1453250 beschrieben ist. Dabei wird von der Verwendung des BGP-Protokolls als EGP-Protokoll ausgegangen.

Fig. 1 zeigt elf autonome Systeme bzw. Routing-Domänen AS-1 bis AS-11 sowie Links, die die Autonomen Systeme miteinander verbinden. Die Autonomen Systeme kommunizieren miteinander mit Hilfe des BGP-Protokolls, wobei einzelne Router der Autonomen Systeme mit entsprechenden Protokollfähigkeiten ausgestattet sind. Man spricht hierbei von BGP-Speakern oder BGP-Instanzen. Mit Hilfe dieser BGP-Instanzen tauschen die Autonomen Systeme Nachrichten miteinander aus, die entweder den gespeicherten Zustand bestätigen oder für das Routing zu berücksichtigende Änderung mitteilen. In Fig. 1 ist angedeutet, wie durch das BGP-Protokolls gesteuert auf einen Linkausfall reagiert wird. Der Link zwischen den Autonomen Systemen AS-6 und AS-8 ist dabei gestört. Als Reaktion auf die Störung - die Reaktion ist durch Pfeile kenntlich gemacht - werden so genannte Update-Nachrichten in dem ganzen Netz propagiert bzw. die elf Autonomen Systeme AS-1, .., Aus-11 erhalten Update-Nachrichten, die sie zu einer Neuberechnung von optimalen Wegen im Sinne einer lokalen Metrik verlassen.

Fig. 2 zeigt dieselbe Vernetzung von Autonomen Systemen wie Fig. 1. In Fig. 2 ist eine schnelle, einen Ersatzweg bereitstellende Reaktion auf den Linkausfall zwischen den Autonomen Systemen AS-6 und AS-8 dargestellt. Es werden Nachrichten zu Autonomen Systemen geschickt, die auf Ersatzwegen für Wege, die über den ausgefallenen Link führen, liegen. Das Autonome System AS-8 sendet Nachrichten über den Linkausfall zu dem Autonomen System AS-7, dieses wiederum zu dem Autonomen System AS-5. Da das Autonome System AS-8 über die Autonomen Systeme AS-7 und AS-5 alle Autonomen Systeme auf der rechten Hälfte der Figur - d.h. die Autonomen Systeme AS-1 bis AS-4 und AS-6 - erreichen kann, braucht von dem Autonomen System AS-5 die von AS-8 empfangene Nachricht über den Linkausfall nicht weiter propagiert zu werden. Analog sendet das autonome System AS-6 eine Nachricht zu dem Autonomen System AS-5. Dieses informiert daraufhin das autonome System AS-7. Von dem Linkausfall betroffen sind damit die Autonomen Systeme AS-5 bis AS-8, die Ersatzwege für über den ausgefallenen Link führende Wege bereitstellen bzw. identifizieren. Im Gegensatz zu der in Fig. 1 gezeigten Reaktion mittels BGP-Protokoll brauchen keine Nachrichten über das ganze Netz propagiert zu werden. In der Figur erhalten die Autonomen System AS-1 bis AS-4 und AS-9 bis ÄS-11 keine Nachrichten über den Linkausfall und müssen keine Anpassungen durchführen.

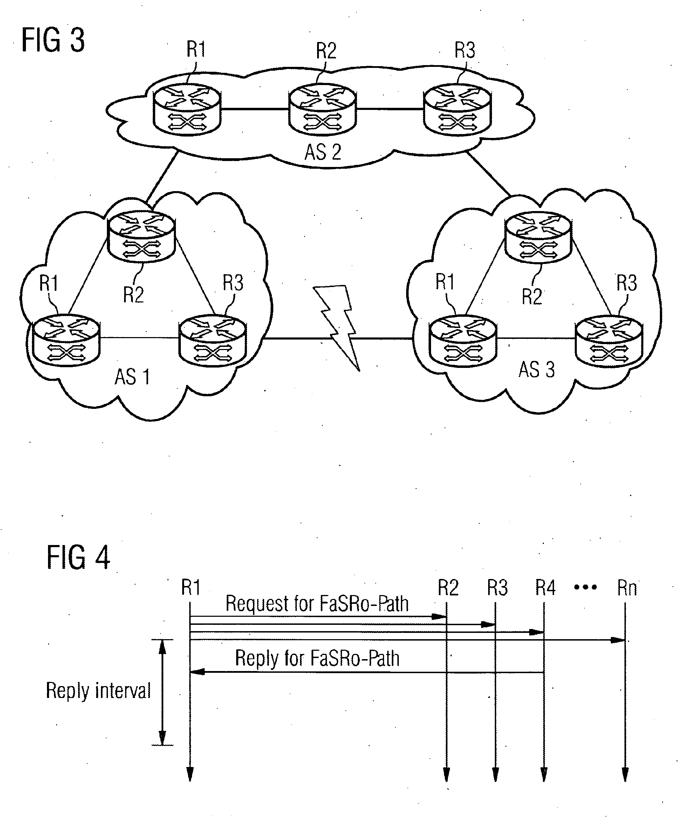

In Fig. 3 ist eine Internet-Topologie gegeben. Hierbei stellen die Wolken Autonome Systeme (AS) dar, nämlich AS-1, AS-2 und AS-3. Diese Internet-Topologie kann als Ausschnitt des Fig. 1 und Fig. 2 angesehen werden (wobei in Fig. 1 und Fig. 2 eine Verbindung zwischen den Autonomen Systemen AS-1 und AS-2 zu ergänzen wäre). Diese Autonomen Systeme tauschen ihre Erreichbarkeitsinformationen (Routen) mittels des Border Gateway Protokolls aus. Die Router R1, R2 und R3 in den Autonomen Systemen sind BGP-Router, d.h. sie können mit anderen BGP-Instanzen mittels des BGP-Protokolls kommunizieren. Fällt nun, wie in Abbildung 1 dargestellt, die Verbindung zwischen den autonomen Systemen AS-1 und AS-3 aus, so muss eine neue Route zum Autonomen System AS-3 gefunden werden, um die Konnektivität wieder herzustellen.

Das Szenario wird aus Sicht von des autonomen Systems AS-1 beschrieben. Hier kennt Router R3 in AS-1, der den Linkausfall zuerst feststellt, keine alternative Route zum autonomen System AS-3. Hingegen kennt Router R2 in AS-1 eine Route über das autonome System AS-2 zum autonomen System AS-3. Das standardisierte BGP-Verhalten würde die Nicht-Verfügbarkeit propagieren und das globale Internet müsste von dem Ausfall in Kenntnis gesetzt werden. Mit dem hier vorgestellten Mechanismus kann der Router R3 in AS-1 seine benachbarten Router R1 und R2 in AS-1 fragen, ob sie eine alternative Route kennen.

Derartige Anfragen sind in Fig. 4 durch Pfeile angedeutet. Dabei sind die Ersatzpfade als FaSRo-Path (Fast Scoped Rerouting Path) bezeichnet. Wie in Fig. 4 gezeigt, kann eine Vielzahl von benachbarten BGP-Routern nach einem Ersatzpfad gefragt werden (in Fig. 4 R1 bis Rn). Es ist weiter gezeigt, dass eine Antwortnachricht (reply for FaSRo-Path) von einem BGP-Router R4 (in Fig. 3 nicht gezeigt) zurück gesendet wird. Diese Antwort erfolgt innerhalb eines maximalen Zeitintervalls, während dessen Antworten berücksichtigt werden (reply interval). BGP-Router R1 wird daher ein Routing entsprechend dieses Ersatzweges vornehmen. Kommt innerhalb des Reply-Intervalls keine Antwort von den Routern, so würde BGP seinen inhärenten Mechanismus verwenden und die Änderung im globalen Internet propagieren. Wie in der EP 1453250 beschrieben, kann auch der BGP Mechanismus ergänzend verwendet werden, wenn der Link dauerhaft ausgefallen ist (persistent error).

## Patentansprüche

1. Verfahren zur Bereitstellung von Ersatzwegen als schnelle Reaktion auf den Ausfall eines Links zwischen zwei Routing-Domänen (AS1, AS2) in einem paketorientierten Netz, bei dem
- durch eine der Routing-Domänen (AS1) der Ausfall des Links festgestellt wird,
- für wenigstens einen Weg zu einem Zielpunkt, der über den ausgefallenen Link führt, wenigstens ein Ersatzweg zu dem Zielpunkt bereitgestellt wird, indem
-- auf dem Ersatzweg liegende Routing-Domänen (AS2, AS3) benachrichtigt werden und
-- benachrichtigte Routing-Domänen (AS2, AS3), die auf dem Ersatzweg liegen, ihr Inter-Domänen-Routing entsprechend eines Routings zu dem Zielpunkt entlang des Ersatzweges einstellen, bis alle Routing-Domänen (AS2, AS3) auf dem Ersatzweg ihr Inter-Domänen-Routing entsprechend einem Routing auf dem Ersatzweg zu dem Zielpunkt eingestellt haben,
wobei:
- der Ausfall durch einen Inter-Domänen-Router (R3) festgestellt wird, und
- durch den Inter-Domänen-Router (R3) überprüft wird, ob im Router ein Ersatzweg gespeichert ist,
**dadurch gekennzeichnet, dass**
- bei Nichtvorhandensein eines Ersatzweges im Router eine Anforderungsnachricht an wenigstens einen benachbarten Inter-Domänen-Router (R2, R3) gesendet wird, womit das Übermitteln wenigstens eines Ersatzweges angefordert wird, und
- bei Vorhandenseins eines Ersatzweges im benachbarten Inter-Domänen-Router (R2, R3) dieser im Rahmen einer Antwortnachricht dem Inter-Domänen-Router (R1) mitgeteilt wird.

2. Verfahren nach Anspruch 1,
**dadurch gekennzeichnet, dass**
- Anforderungsnachrichten an alle erreichbaren benachbarten Inter-Domänen-Router (R2, R3) gesendet werden.

3. Verfahren nach Anspruch 1 oder 2,
**dadurch gekennzeichnet, dass**
- bei Senden wenigstens einer Anforderungsnachricht ein Zeitgeber gestartet wird, und
- nur vor Ablauf des Zeitgebers mitgeteilte Ersatzwege für ein Inter-Domänen-Routing zu dem Zielpunkt berücksichtigt werden.

4. Verfahren nach Anspruch 3,
**dadurch gekennzeichnet, dass**
- wenn kein Ersatzweg vor Ablauf des Zeitgebers mitgeteilt wird eine den Linkausfall berücksichtigende Anpassung des Inter-Domänen-Routings mittels des Border Gateway Protocols erfolgt.

5. Verfahren nach einem der vorhergehenden Ansprüche,
**dadurch gekennzeichnet, dass**
- die Anforderungsnachricht eine Information über den ausgefallenen Link enthält.

6. Inter-Domänen-Router (R1), der derart eingerichtet ist,
dass ein Verfahren nach einem der Ansprüche 1 bis 5 durchführbar ist.

## Claims

1. Method for providing alternative paths as a rapid reaction to the failure of a link between two routing domains (AS1, AS2) in a packet-oriented network, in which
- one of the routing domains (AS1) establishes that the link has failed,
- at least one alternative path to a destination which runs via the failed link is provided for at least one path to said destination by virtue of
-- routing domains (AS2, AS3) situated on the alternative path being notified and
-- notified routing domains (AS2, AS3) situated on the alternative path adjusting their inter-domain routing in line with routing to the destination along the alternative path until all the routing domains (AS2, AS3) on the alternative path have adjusted their inter-domain routing in line with routing on the alternative path to the destination,
wherein
- the failure is established by an inter-domain router (R3), and
- the inter-domain router (R3) checks whether an alternative path is stored in the router,
**characterized in that**
- if there is no alternative path in the router then a request message is sent to at least one neighbouring inter-domain router (R2, R3), requesting the transmission of at least one alternative path, and
- if there is an alternative path in the neighbouring inter-domain router (R2, R3) then it is communicated to the inter-domain router (R1) using a response message.

2. Method according to Claim 1,
**characterized in that**
- request messages are sent to all available neighbouring inter-domain routers (R2, R3).

3. Method according to Claim 1 or 2,
**characterized in that**
- sending at least one request message involves a timer being started, and
- only alternative paths communicated before the timer runs out are taken into account for inter-domain routing to the destination.

4. Method according to Claim 3,
**characterized in that**
- if no alternative path is communicated before the timer runs out then the Border Gateway Protocol is used to adapt the inter-domain routing taking account of the link failure.

5. Method according to one of the preceding claims,
**characterized in that**
- the request message contains information about the failed link.

6. Inter-domain router (R1) which is set up such that a method according to one of Claims 1 to 5 can be carried out.

## Revendications

1. Procédé pour mettre à disposition des chemins de remplacement en tant que réaction rapide à la défaillance d'une liaison entre deux domaines de routage (AS1, AS2) dans un réseau orienté paquets, dans lequel
- la défaillance de la liaison est constatée par l'un des domaines de routage (AS1),
- pour au moins un chemin allant vers un point de destination et passant par la liaison défaillante, au moins un chemin de remplacement allant vers le point de destination est mis à disposition
-- par information de domaines de routage (AS2, AS3) situés sur le chemin de remplacement et
-- par le fait que des domaines de routage informés (AS2, AS3) qui sont situés sur le chemin de remplacement règlent leur routage inter-domaine conformément à un routage vers le point de destination le long du chemin de remplacement jusqu'à ce que tous les domaines de routage (AS2, AS3) sur le chemin de remplacement aient réglé leur routage inter-domaine conformément à un routage sur le chemin de remplacement allant vers le point de destination,
- la défaillance étant constatée par un routeur inter-domaine (R3) et
- le routeur inter-domaine (R3) vérifiant si un chemin de remplacement est stocké dans le routeur,
**caractérisé en ce que**
- en l'absence d'un chemin de remplacement dans le routeur, un message de requête est envoyé à au moins un routeur inter-domaine voisin (R2, R3), ce par quoi est demandée la transmission d'au moins un chemin de remplacement, et,
- en cas de présence d' un chemin de remplacement dans le routeur inter-domaine voisin (R2, R3), celui-ci est communiqué au routeur inter-domaine (R1) dans le cadre d'un message de réponse.

2. Procédé selon la revendication 1, **caractérisé en ce que** des messages de requête sont envoyés à tous les routeurs inter-domaines voisins (R2, R3) joignables.

3. Procédé selon la revendication 1 ou 2, **caractérisé en ce que**
- une horloge est lancée à l'émission d'au moins un message de requête et
- seuls sont pris en compte, pour un routage inter-domaine vers le point de destination, des chemins de remplacement communiqués avant l'expiration de l'horloge.

4. Procédé selon la revendication 3, **caractérisé en ce que**, si aucun chemin de remplacement n'est communiqué avant l'expiration de l'horloge, il y a adaptation, tenant compte de la défaillance de liaison, du routage inter-domaine au moyen du Border Gateway Protocol.

5. Procédé selon l'une des revendications précédentes, **caractérisé en ce que** le message de requête contient une information sur la liaison défaillante.

6. Routeur inter-domaine (R1), configuré de manière telle qu'un procédé selon l'une des revendications 1 à 5 peut être exécuté.
